# FASCICULE DE BREVET EUROPEEN

(11) **EP 1 005 686 B1**
(45) Date de publication et mention de la délivrance du brevet: **22.01.2003**
(21) Numéro de dépôt: 98942746.3
(22) Date de dépôt: 14.08.1998
(51) Int. Cl.: G06K 19/073, G06K 7/00, G07F 7/10

(54) **PROCEDE DE DETECTION DE FRAUDE DES CARTES A MEMOIRE ELECTRONIQUE UTILISEES EN TELEPHONIE**
VERFAHREN ZUM AUFSPÜREN VON MISSBRAUCH VON ELEKTRONISCHEN TELEFONKARTEN
METHOD FOR DETECTING FRAUDULENT USE OF ELECTRONIC PHONECARDS

(30) Priorité: 20.08.1997 FR 9710510
(43) Date de publication de la demande: 07.06.2000
(73) Titulaire: SCHLUMBERGER Systèmes, 92120 Montrouge (FR)
(72) Inventeur: BARAKAT, Simon, F-91290 Saint Germain les Arpajon (FR); CAVAILLES, Charles, F-92320 Châtillon (FR)
(74) Mandataire: Macquet, Christophe
(86) Numéro de dépôt international: FR9801811
(87) Numéro de publication internationale: WO99009521

(56) Documents cités:
- EP-A- 0 619 560
- CH-A- 682 520
- FR-A- 2 640 061

## Description

La présente invention concerne un procédé de détection de fraude d'une carte à mémoire électronique, de fréquence de fonctionnement donnée, utilisée dans un appareil téléphonique.

L'invention trouve une application particulièrement avantageuse à la lutte contre la fraude aux communications établies depuis un appareil téléphonique, notamment mais non exclusivement un appareil téléphonique public.

La vulgarisation de la technologie des cartes à mémoire dans les revues électroniques de grande diffusion, ainsi que dans les établissements d'enseignement technique, a largement contribué à la tentation d'utilisation frauduleuse des appareils téléphoniques par émulation des cartes à mémoire électronique, ou télécartes, prévues pour fonctionner avec lesdits appareils téléphoniques. De plus, la large commercialisation des composants de grande technicité, comme les microprocesseurs programmables, et la facilité de leur utilisation acquise auprès de laboratoires d'écoles ou de programmeurs de microprocesseurs, laissent prévoir une augmentation de ce type de fraude.

Il existe deux grandes catégories de simulateurs de télécartes, à savoir :
- les simulateurs à logique câblée, dits simulateurs passifs, qui, par association de composants discrets, imitent une télécarte,
- les simulateurs à logique programmée, dits simulateurs actifs, qui sont des dispositifs comprenant essentiellement un microcontrôleur programmable associé à quelques composants passifs (résistances, capacités). Au moyen d'un programme interne, le microcontrôleur simule le comportement d'une télécarte. Ce type de composants est maintenant bien répandu sur le marché grand public, de même que leurs outils de mise au point et de programmation, notamment logiciels fonctionnant sur des ordinateurs personnels.

D'une manière générale, la fraude à la télécarte consiste à relier le simulateur, actif ou passif, aux zones de contact électrique du module électronique de la carte par l'intermédiaire de fils de connexion, de manière à connecter le simulateur à l'électronique de l'appareil téléphonique. Afin de détecter ce type de fraude, l'appareil téléphonique est muni d'un dispositif spécifique connu sous le nom de DCE pour Détecteur de Connexion Externe. Ce dispositif de détection est principalement apte à recouvrir les fils de connexion reliant le simulateur aux zones de contact. En l'absence de fils de connexion frauduleuse, la seule capacité électrique présente entre la carte et ladite électrode est une capacité Co due à l'environnement de la carte et de l'électronique. Par contre, la présence de fils de connexion frauduleuse crée une capacité répartie C1 entre l'électrode plane et les contacts du terminal du publiphone. Le principe d'un DCE est donc de détecter l'augmentation de capacité de Co à Co + C1 lors de l'introduction d'une télécarte sur laquelle auront été rapportés des fils de connexion à un simulateur. Une telle approche est décrite par exemple dans EP-A-0619560, le préambule de la revendication 1 étant basé sur ce document.

La détection par DCE a l'inconvénient d'une dérive en température et en humidité de la capacité parasite C1, ce qui pour obtenir de meilleures performances en nombre de fils à détecter, nécessite une correction automatique, matérielle, ou semi-automatique, logicielle. Il y a alors avantage à avoir recours à un montage différentiel pour annuler les effets de cette dérivée de capacité parasite.

C'est précisément pour éviter l'inconvénient précité que l'invention propose un procédé de détection de fraude d'une carte à mémoire électronique, de fréquence de fonctionnement donnée, utilisée dans un appareil téléphonique, remarquable en ce que ledit procédé consiste à appliquer à ladite carte un signal d'excitation de fréquence variable, à enregistrer un motif de réponse fourni par la carte à basse fréquence d'excitation, et à conclure à la fraude en cas de déformation dudit motif de réponse à une fréquence d'excitation inférieure à la fréquence de fonctionnement de la carte.

Comme on le verra en détail plus loin, le procédé de l'invention permet de détecter la présence frauduleuse d'un simulateur actif de télécartes en exploitant le fait que la simulation d'une télécarte par logique programmée ne peut se faire qu'à partir d'un microcontrôleur et d'un algorithme programmable lequel ne peut s'exécuter correctement qu'avec une fréquence maximale Fs, dépendant de l'horloge propre au microcontrôleur et du nombre de cycles nécessaires pour le fonctionnement de l'algorithme, alors que la fréquence de fonctionnement d'une télécarte dépend uniquement des caractéristiques technologiques du composant. Généralement, pour les microcontrôleurs du marché grand public pouvant être utilisés à des fins frauduleuses, cette fréquence Fs est largement inférieure à celle d'un composant authentique.

Si aucune déformation du motif de réponse n'est observée à une fréquence inférieure à la fréquence de fonctionnement de la carte, on ne peut en déduire que l'absence d'un simulateur actif à microcontrôleur, ce qui ne signifie pas l'absence totale de simulateur puisqu'un simulateur passif à logique câblée se comporte vis-à-vis du signal d'excitation fourni par le publiphone exactement comme une télécarte authentique.

Dans le but de détecter la présence d'un tel simulateur passif, l'invention prévoit que ledit procédé consiste, dans une étape supplémentaire, à effectuer une opération d'écriture impossible, puis à effectuer une opération de relecture dudit bit, et à conclure à la fraude en cas de relecture positive. En effet, seules des télécartes frauduleuses sont susceptibles d'être écrites en mémoire dans des conditions d'écriture impossible pour des cartes authentiques.

De même, toujours dans le but de détecter des simulateurs passifs, l'invention propose que ledit procédé consiste, dans une étape supplémentaire, à effectuer une opération de lecture de la mémoire sur un nombre de bits supérieur au nombre de bits de la mémoire. Pour une carte authentique, au delà du nombre de bits de la mémoire, il y a remise des adresses à zéro et relecture des bits à partir du premier, alors qu'une carte frauduleuse fournira une lecture indéterminée.

La description qui va suivre en regard des dessins annexés, donnés à titre d'exemples non limitatifs, fera bien comprendre en quoi consiste l'invention et comment elle peut être réalisée.

La figure 1a est un schéma d'un dispositif de détection d'un simulateur actif de carte à mémoire électronique.

La figure 1b est un diagramme d'un signal d'excitation délivré par le dispositif de détection de fraude de la figure 1a.

La figure 1c est un diagramme d'un motif fourni en réponse au signal d'excitation de la figure 1b.

La figure 2 est un schéma d'une mémoire électronique d'une carte utilisée en téléphonie.

Sur la figure la est représentée une carte destinée à être utilisée dans un appareil téléphonique, tel qu'un publiphone par exemple. Cette carte peut être soit authentique, soit frauduleuse.

Dans le cas d'une carte authentique, il s'agit d'une télécarte à simple mémoire électronique dont la fréquence Fo de fonctionnement est relativement élevée, 250 kHz ou plus, du fait qu'elle ne dépend que des caractéristiques technologiques du composant, lequel se comporte donc comme un circuit à logique câblée.

Dans le cas d'une carte frauduleuse, il s'agit d'un simulateur à logique programmée comportant un microcontrôleur fonctionnant selon un algorithme programmable, lequel ne peut correctement s'exécuter qu'à une fréquence inférieure à une fréquence maximale Fs déterminée par l'horloge propre au microcontrôleur et par le nombre de cycles nécessaires au déroulement de l'algorithme. D'une manière générale, la fréquence maximale Fs de fonctionnement des microcontrôleurs disponibles dans le commerce est inférieure (200 kHz) à la fréquence Fo de fonctionnement d'une carte authentique.

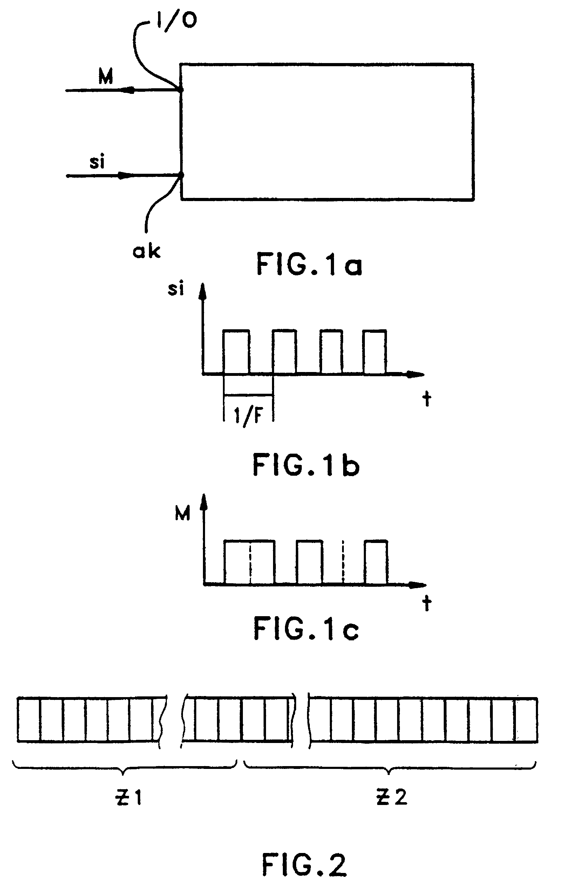

Aussi, le procédé de détection de fraude selon l'invention consiste à appliquer sur la broche CLK (horloge) de la carte un signal si d'excitation à fréquence F variable, tel que celui représenté sur la figure 1b..Sur la broche I/O (Entrée / Sortie) de la carte, on enregistre le motif M de réponse au signal si d'excitation à basse fréquence, c'est-à-dire à une fréquence de fonctionnement normal d'un microcontrôleur, inférieure à la fréquence maximale Fs, 100 kHz par exemple. La figure 1c montre un motif M de réponse possible au signal si d'excitation de la figure 1b, la séquence de base est 0-1-1-0-1-0-0-1. Une carte authentique ou une carte frauduleuse à basse fréquence fournissent ce même motif.

Ensuite, on enregistre le motif de réponse à des fréquences croissantes. Pour une carte authentique, ledit motif de réponse restera identique à celui de la figure 1c jusqu'à des fréquences F pouvant atteindre 250 kHz. Par contre, pour une carte frauduleuse, le motif de réponse subira des déformations autour de la fréquence maximale Fs, de l'ordre de 200 kHz. En pratique, on constate une dilution de la séquence de base indiquée plus haut qui peut même conduire au dédoublement du motif, à savoir 0-0-1-1-1-1-0-0-1-1-0-0-0-0-1-1.

En bref, le procédé de l'invention permet de conclure à la fraude en cas de déformation du motif de réponse de la carte à une fréquence d'excitation inférieure à la fréquence Fo de fonctionnement d'une carte authentique.

Un résultat négatif du diagnostic fourni par le procédé décrit ci-dessus ne peut conduire qu'à la seule conclusion de l'absence d'un simulateur actif, un simulateur passif à simple mémoire étant vu du publiphone à travers le motif de mesure de la même façon qu'une carte authentique.

Aussi, afin de pouvoir détecter également la présence d'un simulateur passif, il est prévu une étape supplémentaire consistant, dans un premier mode de réalisation, dans son énoncé général, à effectuer une opération d'écriture d'au moins un bit dans des conditions d'écriture impossible, puis à effectuer une opération de relecture, et à conclure à la fraude en cas de relecture positive.

Une premier exemple de réalisation est de tenter d'écrire ledit bit sous une tension inférieure à la tension nominale Vpp de lecture / écriture dans la mémoire d'une carte authentique. La plupart des télécartes actuellement en service nécessite une tension Vpp supérieure à 5V. Si le simulateur passif utilise une mémoire fonctionnant sous une tension Vpp de 5V, il est clair que si on cherche à écrire un bit dans la mémoire de l'objet présent dans le publiphone sous une tension Vpp de 5V et que la relecture de ce bit est positive, ledit objet ne peut être que frauduleux car la tension Vpp appliquée est insuffisante pour écrire un bit dans une télécarte authentique.

Un deuxième exemple de réalisation est de tenter d'écrire ledit bit dans une zone Z1 de la mémoire interdite en écriture dans une carte authentique, ceci sous la tension Vpp nominale. On sait en effet, conformément à la figure 2, que la mémoire d'une télécarte comporte une première zone Z1 non modifiable suivie d'une zone Z2 autorisée en écriture. Si donc l'écriture dans la zone Z1 est positive, il y a tout lieu de conclure que la carte introduite dans le publiphone est frauduleuse.

Enfin, selon un deuxième mode de réalisation, ladite étape supplémentaire consiste à effectuer une opération de lecture de la mémoire sur un nombre de bits supérieur au nombre de bits de ladite mémoire. Ainsi, dans le cas de la mémoire représentée sur la figure 2, on peut par exemple relire un nombre de bits supérieur à celui des zones Z1 et Z2, par exemple un nombre de bits égal à celui de la suite Z1 + Z2 + Z1. Une télécarte authentique répondra d'abord par les bits de Z1 et Z2, puis son compteur d'adresses passant par 0, elle retransmettra à nouveau les Z1 premiers bits. Un simulateur répondra au-delà des Z1 + Z2 premiers bits de manière indeterminée.

## Revendications

1. Procédé de détection de fraude d'une carte à mémoire électronique, de fréquence (Fo) de fonctionnement donnée, utilisée dans un appareil téléphonique, **caractérisé en ce que** ledit procédé consiste à appliquer à ladite carte un signal (si) d'excitation de fréquence variable, à enregistrer un motif (M) de réponse fourni par la carte à basse fréquence d'excitation, et à conclure à la fraude en cas de déformation dudit motif (M) de réponse à une fréquence d'excitation inférieure à la fréquence (Fo) de fonctionnement de la carte.

2. Procédé selon la revendication 1, **caractérisé en ce que** ledit procédé consiste, dans une étape supplémentaire, à effectuer une opération d'écriture d'au moins un bit dans la mémoire électronique dans des conditions d'écriture impossible, puis à effectuer une opération de relecture dudit bit, et à conclure à la fraude en cas de relecture positive.

3. Procédé selon la revendication 2, **caractérisé en ce que** lesdites conditions d'écriture impossible consistent à écrire ledit bit dans une zone de la mémoire autorisée en écriture sous une tension inférieure à la tension (Vpp) nominale de lecture / écriture de ladite mémoire.

4. Procédé selon la revendication 2, **caractérisé en ce que** lesdites conditions d'écriture impossible consistent à écrire ledit bit dans une zone (Z1) de la mémoire interdite en écriture sous la tension nominale de lecture / écriture de ladite mémoire.

5. Procédé selon la revendication 1, **caractérisé en ce que** ledit procédé consiste, dans une étape supplémentaire, à effectuer une opération de lecture de la mémoire sur un nombre de bits supérieur au nombre de bits de ladite mémoire.

## Patentansprüche

1. Verfahren zum Fälschungsnachweis einer in einem Telefonapparat benutzten elektronischen Speicherkarte mit einer bestimmten Funktionsfrequenz, **dadurch gekennzeichnet, dass** das besagte Verfahren darin besteht, dass an der besagten Karte ein Erregungssignal (si) mit variabler Frequenz angewendet, ein von der Karte abgegebenes Antwortmuster (M) bei niedriger Erregungsfrequenz aufgezeichnet und auf eine Fälschung geschlossen wird, wenn das besagte Antwortmuster (M) bei einer niedrigeren Erregungsfrequenz als der Funktionsfrequenz (Fo) der Karte verformt ist.

2. Verfahren nach Anspruch 1, **dadurch gekennzeichnet, dass** das besagte Verfahren in einem zusätzlichen Schritt darin besteht, dass unter Bedingungen, unter denen ein Schreiben unmöglich ist, ein Schreibvorgang von mindestens 1 Bit im elektronischen Speicher und anschließend ein Lesevorgang des besagten Bits vorgenommen wird und bei einem positiven Ablesen auf eine Fälschung geschlossen wird.

3. Verfahren nach Anspruch 2, **dadurch gekennzeichnet, dass** die besagten Bedingungen, unter denen ein Schreiben unmöglich ist, darin bestehen, dass das besagte Bit in einem Bereich des Speichers geschrieben wird, in dem das Schreiben bei einer niedrigeren Spannung als der Nennspannung (Vpp) für Lesen / Schreiben des besagten Speichers zulässig ist.

4. Verfahren nach Anspruch 2, **dadurch gekennzeichnet, dass** die besagten Bedingungen, unter denen ein Schreiben unmöglich ist, darin bestehen, dass das besagte Bit in einem Bereich (Z1) des Speichers geschrieben wird, in dem das Schreiben bei der Nennspannung für Lesen / Schreiben des besagten Speichers nicht zulässig ist.

5. Verfahren nach Anspruch 1, **dadurch gekennzeichnet, dass** das besagte Verfahren in einem zusätzlichen Schritt darin besteht, an einer höheren Anzahl an Bits als der Bitanzahl des besagten Speichers ein Ablesen des Speichers durchzuführen.

## Claims

1. Fraud detection method for an electronic memory card, of given operating frequency (Fo), used in a telephone device, wherein said method consists of applying to said card a variable frequency excitation signal (si), of saving a response pattern (M) supplied by the card at low excitation frequency, and of concluding that a fraud has occurred if said response pattern (M) is deformed at an excitation frequency lower than the card operating frequency (Fo).

2. Method according to claim 1, wherein said method consists, in an additional step, of writing at least one bit in the electronic memory under impossible write conditions, then reading said bit and of concluding that a fraud has occurred if the read operation is successful.

3. Method according to claim 2, wherein said impossible write conditions consist of writing said bit in an area of memory authorised for writing at a voltage lower than the nominal read / write voltage (Vpp) of said memory.

4. Method according to claim 2, wherein said impossible write conditions consist of writing said bit in a memory area (Z1) forbidden for writing under the nominal read / write voltage of said memory.

5. Method according to claim 1, wherein said method consists, in an addition step, of reading in the memory a number of bits greater than the number of bits in said memory.
